# FASCICULE DE BREVET EUROPEEN

(11) **EP 0 612 132 B1**
(45) Date de publication et mention de la délivrance du brevet: **23.04.1997**
(21) Numéro de dépôt: 94400231.0
(22) Date de dépôt: 03.02.1994
(51) Int. Cl.: H02G 3/22, B60R 16/02, H02G 3/08

(54) **Dispositif pour réaliser le passage d'un faisceau de fils électriques à travers une paroi,en particulier dans un véhicule automobile**
Verfahren zum Erzeugen einer Durchführung für ein elektrisches Kabelbündel durch eine Wand, insbesondere in einem Kraftfahrzeug
Device for providing a passage for an electric cable bundle through a wall, especially in a motor vehicle

(30) Priorité: 19.02.1993 FR 9301947
(43) Date de publication de la demande: 24.08.1994
(73) Titulaire: AUTOMOBILES PEUGEOT, 75116 Paris (FR); AUTOMOBILES CITROEN, 92200 Neuilly-sur-Seine (FR)
(72) Inventeur: Vuillemey, Christian, F-70400 Hericourt (FR)
(74) Mandataire: Thinat, Michel

(56) Documents cités:
- EP-A- 0 506 627
- FR-A- 2 678 705
- US-A- 4 797 513

## Description

La présente invention concerne un dispositif pour réaliser le passage d'un faisceau de fils électriques à travers une paroi, en particulier dans un véhicule automobile.

Les faisceaux de fils électriques destinés à traverser une paroi dans un véhicule automobile sont constitués de façon connue par un certain nombre de fils gainés juxtaposés présentant une section circulaire et autour desquels a été surmoulé un manchon d'étanchéité ou "passe-gaine" (voir FR-A-2 678 705).

Or, ces faisceaux ne permettent pas l'obtention d'une étanchéité acoustique suffisante de part et d'autre de la paroi, du fait de l'existence d'espaces libres occasionnant des fuites entre les fils de section circulaire juxtaposés.

Afin de remédier à ce problème, les fils gainés, peuvent être préalablement enduits d'un produit destiné à empêcher ces fuites (voir US-A-4 797 513). Or, cette technique engendre un surcoût important.

La présente invention résout ces problèmes et propose un dispositif pour réaliser le passage d'un faisceau de fils électriques à travers une paroi, en particulier dans un véhicule automobile, permettant de façon économique l'obtention d'une étanchéité suffisante de part et d'autre de la paroi.

A cet effet la présente invention a pour objet un dispositif pour réaliser le passage d'un faisceau de fils électriques à travers une paroi, en particulier dans un véhicule automobile, du genre dans lequel un tronçon de faisceau, constitué de fils juxtaposés enrobés chacun d'une gaine isolante, traverse la paroi par une ouverture avec interposition d'un manchon d'étanchéité surmoulé sur le tronçon, ce dispositif étant caractérisé en ce que les gaines enrobant respectivement les fils du tronçon présentent des sections identiques en forme de polygone régulier et sont jointives suivant leurs faces formées par les côtés de ce polygone, de façon à réaliser une étanchéité acoustique de part et d'autre de la paroi précitée.

Suivant une réalisation particulière de l'invention, le polygone est un carré.

Suivant une variante de réalisation, le polygone est un triangle.

Suivant une caractéristique particulière, le tronçon est réalisé dans un moule comprenant un support comportant des canaux de guidage pour chaque fil gainé, et plusieurs parties coulissantes propres à enserrer les fils du tronçon et à surmouler sur ce dernier le manchon précité.

Mais d'autres avantages de l'invention apparaîtront mieux dans la description détaillée qui suit et se réfère aux dessins annexés donnés uniquement à titre d'exemple et dans lesquels.

La figure 1 est une vue partielle en coupe, illustrant un faisceau de fils électriques traversant une paroi appartenant à un véhicule automobile conformément à l'invention.

La figure 2 est une vue partielle en coupe suivant la ligne II-II de la figure 1, illustrant une réalisation particulière de l'invention.

La figure 3 est une vue similaire à la précédente, mais illustrant un autre mode de réalisation de l'invention.

La figure 4 est une vue de face, illustrant une réalisation du dispositif permettant la fabrication d'un tronçon de faisceau de fils électriques conformément à l'invention.

La figure 5 est une vue partielle en coupe suivant la ligne V-V de la figure précédente.

La figure 6 est une vue de dessus de la figure 4.

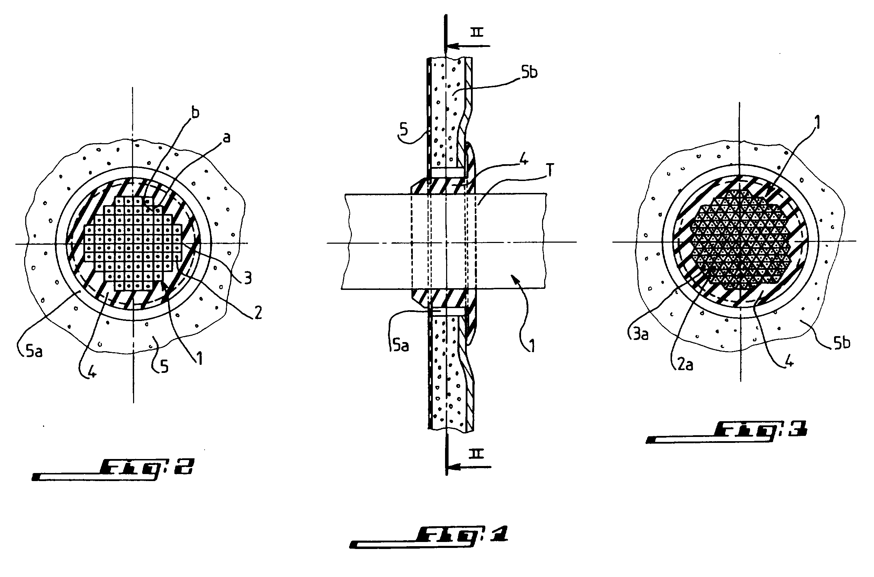

Sur la figure 1, on voit un tronçon T de faisceau de fils électriques constitué par un certain nombre de fils gainés juxtaposés, autour duquel faisceau 1 a été surmoulé un manchon d'étanchéité 4 ou "passe-gaine", interposé de manière étanche entre le faisceau et le bord d'une ouverture 5a ménagée dans un panneau 5 comportant un garnissage 5b et appartenant à la caisse d'un véhicule automobile.

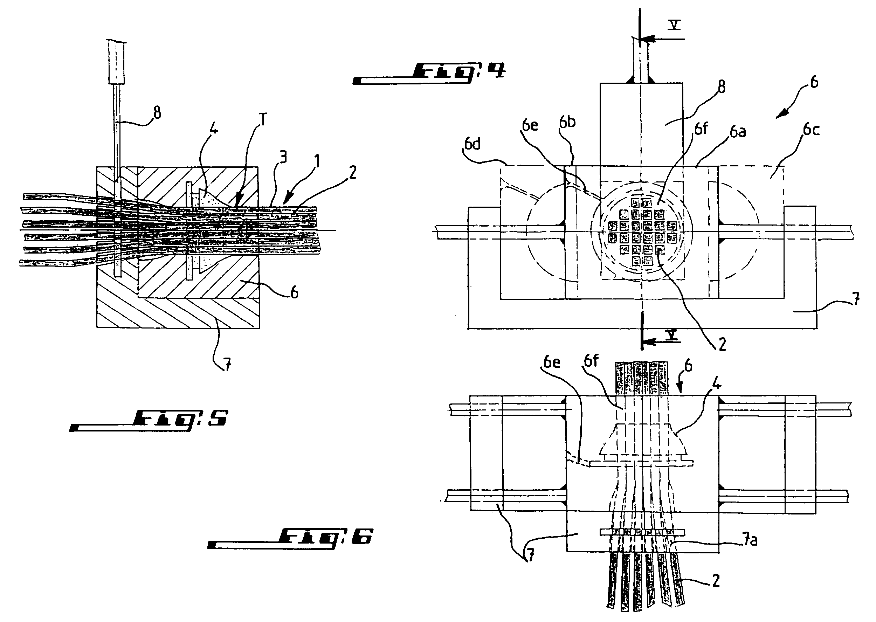

Sur la figure 2, on voit que selon un mode de réalisation particulier, les gaines 3 enrobant les fils 2 constituant le faisceau précité 1, présentent une section carrée, les faces a,b en vis-à-vis des gaines 3 étant jointives de façon à ne laisser subsister aucun espace libre entre deux gaines juxtaposées pouvant occasionner des fuites acoustiques de part et d'autre de la paroi 5.

Sur la figure 3, les gaines 3a des fils 2a constituant le faisceau 1, présentent une section triangulaire, les faces en vis-à-vis des gaines 3a étant de la même façon que dans le cas précédent, jointives de façon à former un faisceau 1 acoustiquement étanche.

Sur les figures 4 à 6, le dispositif de moulage 6 permettant la réalisation du surmoulage des faisceaux précités 1 comprend un support de guidage 7 le long duquel coulissent les deux parties complémentaires (6a, 6b) destinées à la formation du manchon précité 4, entre une position ouverte (6c, 6d) et une position fermée (6a, 6b) du moule 6. Ces deux parties complémentaires sont conformées de façon à enserrer le faisceau précité 1 en position fermée afin de réaliser la juxtaposition jointive recherchée des fils gainés 2.

La réalisation d'un faisceau électrique conforme à l'invention au moyen du dispositif précité va être décrite ci-après à l'aide des figures 4 à 6.

Après avoir refermé le moule 6 en laissant subsister un léger jeu (quelques millimètres) entre les deux parties complémentaires (6a, 6b), les différents fils gainés 2 du faisceau 1 sont introduits respectivement dans des canaux 7a ménagés dans le support 7, puis dans l'espace 6b séparant les deux parties (6a, 6b) jusqu'à la position souhaitée. La fermeture complète (ou verrouillage) du moule 6 permet alors l'obtention d'une juxtaposition serrée des fils 2. L'injection du matériau de surmoulage, selon des méthodes connues, peut alors être réalisée à travers un canal 6e prévu dans le moule 6, de manière à former le manchon d'étanchéité 4. L'ouverture du moule 6 (positions 6c et 6d des deux parties complémentaires du moule 6), permet alors l'extraction du faisceau 1 et du surmoulage associé 4.

On notera d'une part qu'un outil de découpe, tel que représenté en 8 sur les figures 4 et 5, pourra être associé au dispositif, et que d'autre part, après la fabrication du faisceau 1 telle que décrite ci-dessus, d'autres opérations usuelles consistant par exemple à équiper le faisceau 1 des connecteurs nécessaires pourront être effectuées.

On précisera également que la section des fils de forme carrée, ou ayant la forme d'un autre polygone, pourra être limitée à la zone de passage ou bien pourra s'étendre sur toute la longueur du faisceau.

On a donc réalisé grâce à l'invention un dispositif simple et économique pour réaliser le passage d'un faisceau de fils électriques à travers une paroi dans un véhicule automobile, permettant d'obtenir une étanchéité acoustique suffisante de part et d'autre de la paroi sans qu'il soit nécessaire d'enduire préalablement le faisceau.

## Revendications

1. Dispositif pour réaliser le passage d'un faisceau (1) de fils électriques (2,2a) à travers une paroi (5) en particulier dans un véhicule automobile, du genre dans lequel un tronçon (T) du faisceau (1), constitué de fils (2,2a) juxtaposés enrobés chacun d'une gaine isolante (3,3a), traverse la paroi (5) par une ouverture (5a) avec interposition d'un manchon d'étanchéité (4) surmoulé sur le tronçon (T), caractérisé en ce que les gaines (3,3a) enrobant respectivement les fils (2, 2a) du tronçon (T) présentent des sections identiques en forme de polygone régulier et sont jointives suivant leurs faces (a,b) formées par les côtés de ce polygone, de façon à réaliser une étanchéité acoustique de part et d'autre de la paroi précitée (5).

2. Dispositif selon la revendication 1, caractérisé en ce que le polygone est un carré.

3. Dispositif selon la revendication 1, caractérisé en ce que le polygone est un triangle.

4. Dispositif selon l'une quelconque des revendications 1 à 3, caractérisé en ce que le tronçon (T) est réalisé dans un moule (6) comprenant un support (7) comportant des canaux de guidage (7a) pour chaque fil gainé (2), et plusieurs parties coulissantes (6a, 6b) propres à enserrer les fils du tronçon (T) et à surmouler sur ce dernier le manchon précité (4).

## Patentansprüche

1. Vorrichtung zur Schaffung der Durchführung eines Bündels (1) von elektrischen Leitungsdrähten (2, 2a) durch eine Wand (5) hindurch insbesondere in einem Kraftfahrzeug, derjenigen Gattung, bei welcher ein Abschnitt (T) des Bündels (1), der aus nebeneinanderliegenden, jeweils von einer isolierenden Umhüllung (3, 3a) ummantelten Drähten (2, 2a) besteht, die Wand (5) durch eine Öffnung (5a) durchsetzt, mit Zwischenschaltung einer über den Abschnitt (T) herum übergeformten Dichtungshülse (4), dadurch gekennzeichnet, daß die jeweils die Drähte (2, 2a) des Abschnittes (T) ummantelden Umhüllungen (3, 3a) gleichartige Querschnitte in der Gestalt eines regelmässigen Vielecks aufweisen und entlang ihrer durch die Seiten dieses Vielecks gebildeten Flächen (a, b) aneinandergrenzen, um eine akustische Abdichtung beiderseits der vorgenannten Wand (5) zu schaffen.

2. Vorrichtung nach Anspruch 1, dadurch gekennzeichnet, daß das Vieleck ein Quadrat ist.

3. Vorrichtung nach Anspruch 1, dadurch gekennzeichnet, daß das Vieleck ein Dreieck ist.

4. Vorrichtung nach irgendeinem der Ansprüche 1 bis 3, dadurch gekennzeichnet, daß der Abschnitt (T) in einer Form (6) hergestellt wird, die einen Führungskanäle (7a) für jeden ummantelten Draht (2) und mehrere gleitende Teile (6a, 6b) aufweisenden Träger (7) umfaßt, welche geeignet ist, die Drähte des Abschnittes (T) zu umspannen und diesen letzteren auf die vorgenannte Hülse (4) überzuformen.

## Claims

1. Device for providing the passage of a bundle (1) of electric wires (2, 2a) through a wall (5) in particular of an automotive vehicle, of the kind in which one segment (T) of the bundle (1) consisting of juxtaposed wires (2, 2a) wrapped each one into an insulating sheath (3, 3a) extends through the wall (5) through an opening (5a) with the interposition of a sealing bush (4) molded integral with and over the segment (T), characterized in that the sheaths (3, 3a) wrapping the wires (2, 2a), respectively, of the segment (T) exhibit identical sections in the shape of a regular polygon and are joining along their faces (a, b) formed of the sides of this polygon so as to provide an acoustical tightness on either side of the aforesaid wall (5).

2. Device according to claim 1, characterized in that the polygone is a square.

3. Device according to claim 1, characterized in that the polygon is a triangle.

4. Device according to any one of claims 1 to 3, characterized in that the segment (T) is made in a mold (6) comprising a support (7) comprising guide ducts (7a) for each sheathed wire (2) and several sliding portions (6a, 6b) adapted to enclose the wires of the segment (T) and to mold the latter integrally with and over the aforesaid bush (4).
